# EUROPÄISCHE PATENTSCHRIFT

(11) **EP 2 709 254 B1**
(45) Veröffentlichungstag und Bekanntmachung des Hinweises auf die Patenterteilung: **13.03.2019**
(21) Anmeldenummer: 12006549.5
(22) Anmeldetag: 18.09.2012
(51) Int. Cl.: H02M 3/158, H02J 7/00

(54) **Getakteter Gleichspannungswandler**
Pulsed DC-DC converter
Convertisseur de tension continue cadencé

(43) Veröffentlichungstag der Anmeldung: 19.03.2014
(73) Patentinhaber: AZUR SPACE Solar Power GmbH, 74072 Heilbronn (DE)
(72) Erfinder: Löckenhoff, Rüdiger, Dr., 74321 Bietigheim-Bissingen (DE)
(74) Vertreter: Koch Müller Patentanwaltsgesellschaft mbH

(56) Entgegenhaltungen:
- EP-A2- 1 083 646
- US-A- 5 821 729
- US-A1- 2005 105 224
- US-A1- 2006 097 707
- US-B1- 6 222 344

## Beschreibung

Die Erfindung betrifft einen getakteten Gleichspannungswandler gemäß dem Oberbegriff des Patentanspruchs 1.

Aus der US 5 821 729 ist eine Serieschaltung von Batterien bekannt. Mittels mehrere auf einem gemeinsamen Spulenkern angeordneten Teilwicklungen wird bei einer Spannungsdifferenz zwischen den Einzelbatterien von einer Batterie auf eine andere Batterie Energie mittels einer Zerhackereinrichtung übertragen. Die Polaritäten der einzelnen Teilwicklungen werden mit einen hohen Taktfrequenz im Bereich von einigen KHz umgeschaltet.

Des Weiteren ist aus der US 2005 0105224 A1 eine Anordnung mit mehreren Solargeneratoren bekannt. Die einzelnen Solargeneratoren weisen hierbei eigene Steuerschaltungen für ein Nachregeln auf, um einen optimalen Arbeitspunkt der jeweiligen Solargeneratoren zu erreichen und den Wirkungsgrad der gesamten Anordnung zu verbessern. Indem die Solargeneratoren untereinander verschiedene Leitungsdaten aufweisen, ist jedem Solargenerator eine eigene Spannungswandlung mit einem variablen Verstärkungsfaktor zugeordnet. Hierdurch lassen sich die unterschiedlichen Solargeneratoren parallel an einen zentralen Spannungswandler, nachfolgend auch Inverter genannt, zusammenschließen und die Ausgangsleistung der gesamten Anordnung erhöhen.

Ferner ist aus der US 2010 0133911 A1 eine Anordnung mit einer Vielzahl von Gleichspannungsquellen bekannt, wobei jede Gleichspannungsquelle mit einem der jeweiligen Gleichspannungsquelle zugeordneten Gleichspannungswandler verschaltet ist. Die Gleichspannungswandler sind auf der Ausgangsseite in Serie verschaltet, so dass sich die Ausgangsspannungen der Gleichspannungswandler addieren. Des Weiteren weisen die Gleichspannungswandler einen mittels eins Flusskonzentrators induktiv mit einem Ausgangskreis gekoppelten Eingangskreis auf.

Aus der EP 1 083 646 A2 ist ein getakteter Gleichspannungswandler mit den Merkmalen des Oberbegriffs der unabhängigen Ansprüche 1 und 6 bekannt. Aus der US 2006 / 09 7707 A1 und der US 6 222 344 B1 sind weitere getaktete Gleichspannungswandler bekannt.

Vor diesem Hintergrund besteht die Aufgabe der Erfindung darin, eine Vorrichtung anzugeben, die den Stand der Technik weiterbildet.

Die Aufgabe wird durch einen getakteten Gleichspannungswandler mit den Merkmalen des Patentanspruchs 1 gelöst. Vorteilhafte Ausgestaltungen der Erfindung sind Gegenstand von Unteransprüchen.

Gemäß dem Gegenstand der Erfindung wird ein getakteter Gleichspannungswandler bereitgestellt, mit einem Eingangskreis und einem Ausgangskreis, wobei der Eingangskreis eine erste Schaltungseinheit und eine zweite Schaltungseinheit aufweist, und die erste Schaltungseinheit des Weiteren aufweist, eine erste Gleichstromquelle mit einem ersten Pol und einem zweiten Pol, und die erste Schaltungseinheit ferner eine erste Speicherdrossel mit einem ersten Pol und einem zweiten Pol umfasst und wobei die erste Speicherdrossel parallel mit der ersten Gleichstromquelle verschaltet ist, und die erste Schaltungseinheit des Weiteren einen ersten Schalter aufweist, wobei der erste Schalter zwischen der ersten Gleichstromquelle und der ersten Speicherdrossel angeordnet ist und in einem ersten Zustand den ersten Pol der ersten Speicherdrossel mit den ersten Pol der ersten Gleichstromquelle verbindet und in einem zweiten Zustand den ersten Pol der ersten Speicherdrossel von dem ersten Pol der ersten Gleichstromquelle trennt, und die zweite Schaltungseinheit eine zweite Gleichstromquelle mit einem ersten Pol und einem zweiten Pol aufweist, und die zweite Schaltungseinheit ferner eine zweite Speicherdrossel mit einem ersten Pol und einem zweiten Pol umfasst und die zweite Speicherdrossel parallel mit der zweiten Gleichstromquelle verschaltet ist, und ferner die zweite Schaltungseinheit einen zweiten Schalter umfasst, wobei der zweite Schalter zwischen der zweiten Gleichstromquelle und der zweiten Speicherdrossel angeordnet ist und in dem ersten Zustand den ersten Pol der zweiten Speicherdrossel mit dem ersten Pol der zweiten Gleichstromquelle verbindet und in dem zweiten Zustand den ersten Pol der zweiten Speicherdrossel von dem ersten Pol der zweiten Gleichstromquelle trennt, und wobei der Ausgangskreis einen Spannungsausgang und ein erstes Halbeiterbauelement und einen parallel zu dem Spannungsausgang verschalteten Ausgangskondensator aufweist, und wobei die erste Schaltungseinheit und die zweite Schaltungseinheit in Serie verschaltet sind und der zweite Pol der ersten Speicherdrossel mit dem ersten Pol der zweiten Speicherdrossel einen gemeinsamen elektrischen Anschluss ausbilden und die erste Speicherdrossel und die zweite Speicherdrossel einen gemeinsamen Flusskonzentrator aufweisen und sich die Spannung an der ersten Speicherdrossel mit der Spannung an der zweiten Speicherdrossel addieren. Vorzugsweise ist der Flusskonzentrator als gemeinsamer Kern der ersten Speicherdrossel und der zweiten Speicherdrossel ausgebildet, so dass die erste Speicherdrossel und die zweite Speicherdrossel eine starke induktive Kopplung aufweisen. Es sei angemerkt, dass im Allgemeinen zwei Gleichstromquellen nicht ohne weiteres Identisch sind, d. h. um eine möglichst hohe Ausgangsleistung der Serienschaltung zu erzielen, ist eine Zusammenstellung von Gleichstromquellen mit gleicher elektrischer Ausgangsleistung nicht ohne aufwändige exakte Vermessung der Ausgangsdaten der einzelnen Gleichstromquelle durchführbar. Andernfalls wird bei der Serienschaltung von Gleichstromquellen der maximale Ausgangsstrom der Gesamtanordnung durch die Gleichstromquelle mit dem kleinsten Ausgangsstrom bestimmt. Untersuchungen haben ferner gezeigt, dass Gleichstromquellen auch unterschiedliche Abhängigkeit von der Temperatur und eine unterschiedliche Degradation mit der Zeit durchlaufen. Des Weiteren sei angemerkt, dass die Schaltungsanordnung auf dem Prinzip eines Inverswandlers beruht, d.h. die Ausgangsspannung des Wandlers weist eine entgegengesetzte Polarität zu der Eingangsspannung des Eingangskreises des Inverswandlers auf.

Ein Vorteil der erfindungsgemäßen Vorrichtung ist es, dass sich die unterschiedliche Leistungen von den angeschlossenen Stromquellen, welche in Serie zueinander verschaltet sind, ausgleichen lässt. Ein aufwändiges Vermessen und Zusammenstellung von Gleichstromquellen mit gleichartigen elektrischen Daten lässt sich vermeiden. Mit der erfindungsgemäßen Vorrichtung werden in dem ersten Zustand, in der Zeit also in der die Speicherdrosseln von den Strömen der Gleichstromquellen durchflossen werden, die Spannungen addiert. Untersuchungen haben gezeigt, dass der erste Zustand zeitlich von dem Umschalten in den zweiten Zustand vorzugsweise so früh zu begrenzen ist, dass sich ein Spannungsabfall an der leistungsschwächeren Gleichstromquelle durch einen während des ersten Zustands immer weiter ansteigenden Stroms durch die Speicherdrosseln unterdrückt wird. Hierzu sind vorzugsweise Schaltfrequenzen im Bereich von einigen KHz ausreichend Es versteht sich, dass die Speichedrosseln niederohmig sind.

Mittels einer induktiven Ankopplung jeder einzelnen Gleichstromquelle lässt sich eine sogenanntes "Loadbalancing" durchführen, d. h. der maximale Ausgangsstrom der Serienschaltung wird nicht mehr von der leistungsschwächsten Gleichstromquelle bestimmt. Der Wirkungsgrad der gesamten Schaltungsanordnung wird erhöht. Des Weiteren werden auch die Einflüsse einer unterschiedlichen Degradation und Temperaturabhängigkeit der einzelnen Gleichstromquellen weitestgehend ausgeglichen.

Gemäß dem Gegenstand der Erfindung weisen die erste Gleichstromquelle und die zweite Gleichstromquelle einen gemeinsamen elektrischen Anschluss auf, wobei die beiden Gleichstromquellen in Serie verschaltet sind und sich die Spannung der ersten Gleichstromquelle mit der Spannung der zweiten Gleichstromquelle addiert. Anders ausgedrückt, der gemeinsame Anschluss ist zwischen den beiden Gleichstromquellen als sogenannter Mittelabgriff ausgebildet. Hierdurch lässt sich an jeder Gleichstromquelle eine Spannung abgreifen. Durch die Serienschaltung der beiden Gleichstromquellen addieren sich die Spannungen der beiden Stromquellen. In einer anderer Weiterbildung weist der erste Pol der ersten Gleichstromquelle gegenüber dem zweiten Pol der ersten Gleichstromquelle und der erste Pol der zweiten Gleichstromquelle gegenüber dem zweiten Pol der zweiten Gleichstromquelle jeweils eine größere Spannung auf. Hierdurch addieren sich die Spannungen der beiden Gleichstromquellen gleichsinnig, sodass die Gesamtspannung von beiden Gleichstromquellen größer ist als jede Spannung einer einzelnen Stromquelle.

In einer bevorzugten Ausführungsform umfasst das erste Halbleiterbauelement eine ersten Diode und / oder einen Halbleiterschalter. Mittels des ersten Halbleiterbauelements wird in dem Ausgangskreis ein Rückfluss der Ladungen in die Spule unterdrückt. Erst hierdurch lässt sich bei der nach dem Prinzip des Inverswandlers arbeitenden Schaltungsanordnung eine Gleichspannung an dem Spannungsausgang erzeugen. Es sei angemerkt, dass der Inverswandler auch als "Buck Boost Converter" bezeichnet wird.

In einer anderen Weiterbildung sind eine Vielzahl von ersten Schaltungseinheiten und hierdurch auch eine Vielzahl von ersten Stromquellen, in einer Serienschaltung verschaltet, wobei nur eine der ersten Schaltungseinheiten mit der zweiten Schaltungseinheit unmittelbar verschaltet ist. Die Höhe der am Spannungsausgang anliegenden Spannung ist proportional zu der Anzahl der in Serie verschalteten Gleichstromquellen und invers zu der Spannung im Eingangskreis. Bevorzugt ist, die Spannung am Spannungsausgang größer als die Spannung der Serienverschaltung von Gleichstromquellen im Eingangskreis zu wählen. Es sei angemerkt, dass es sich bei den Spannungen von den Gleichstromquellen und bei der Ausgangsspannung jeweils um eine Gleichspannung handelt.

Gemäß dem Gegenstand der Erfindung ist der Ausgangskreis mittels des ersten Halbeiterbauelements parallel zu dem Eingangskreis geschaltet, wobei der Ausgangsspeicherkondensator parallel mit der Reihenschaltung aus erster Speicherdrossel und zweiter Speicherdrossel verschaltet ist.

In einer alternativen Ausführung ist der Ausgangskreis mittels einer Zusatzdrossel mit dem Eingangskreis verschaltet, wobei die Zusatzdrossel mit dem Flusskonzentrator Induktiv gekoppelt ist. Die Zusatzdrossel weist im Unterschied zu der ersten Speicherdrossel keine Parallelschaltung mit einer Gleichstromquelle auf. Untersuchungen haben gezeigt, dass eine vorteilhafte besonders hohe induktive Kopplung zwischen der Zusatzdrossel und der ersten Speicherdrossel und der zweiten Speicherdrossel erzielen lässt, indem ein gemeinsamer Flusskonzentrator für die Drosseln vorgesehen ist. Es sei angemerkt, dass sich die Zusatzdrossel sowohl an dem Ende der Serienschaltung mit der niedrigen Spannung oder alternativ an dem Ende der Serienschaltung mit der hohen Spannung anordnen lässt. In einer Weiterbildung lässt sich an beiden Enden der Serienschaltung jeweils eine Zusatzdrossel anordnen.

Gemäß einer alternativen Ausführung der Erfindung weist der Eingangskreis und Ausgangskreis eine galvanische Trennung auf, indem der Ausgangskreis eine als Sekundärwicklung ausgebildete Erste Induktivität aufweist, wobei die Sekundärwicklung jedoch mit dem Flusskonzentrator induktiv gekoppelt ist. Es versteht sich, dass eine besonders gute induktive Kopplung des Eingangskreises mit dem Ausgangskreis den Wirkungsgrad der gesamten Anordnung erhöht. Des Weiteren ist die Erste Induktivität parallel zu dem Ausgangskondensator verschaltet, wobei das erste Halbleiterbauelement zwischen einem ersten Abgriff der ersten Induktivität und einem ersten Abgriff des Ausgangskondensators angeordnet ist. In einer Ausführungsform ist ein zweites Halbleiterbauelement zwischen einem zweiten Abgriff der ersten Induktivität und einem zweiten Abgriff des Ausgangskondensators vorgesehen. Das zweite Halbleiterbauelement ist vorzugsweise als eine Diode und / oder als ein Halbleiterschalter ausgeführt.

In einer anderen Weiterbildung ist ein Pufferkondensator parallel zu der Serienschaltung gebildet von der ersten Schaltungseinheit und der zweiten Schaltungseinheit sowohl während des ersten Zustands als auch während des zweiten Zustands verschaltet. Mit dem Pufferkondensator lässt sich bei kurzeitigen Überlastungen die Spannung an der Serienschaltung konstant halten. Mit Überlastungen werden Stromentnahmen oberhalb des maximalen Ausgangsstroms der Serienschaltung bezeichnet. Ein weiterer Vorteil ist, dass während des Zeitraums, in dem kein Strom von den Gleichstromquellen in die Spulen geliefert wird, der Pufferkondensator Ladungen aus den Gleichstromquellen aufnimmt. Hierdurch lässt sich der Wirkungsgrad der erfindungsgemäßen Vorrichtung erhöhen.

In einer bevorzugten Weiterbildung ist in jeder Schaltungseinheit ein Speicherkondensator parallel mit der jeweiligen Gleichstromquelle sowohl während des ersten Zustands als auch während des zweiten Zustands verschaltet. Ein Vorteil ist, dass im Vergleich zu dem Pufferkondensator die Speicherkondensatoren eine kleinere Spannungsfestigkeit aufweisen und in Folge kostengünstiger sind und bei vergleichbarer Kapazität wesentlich kleiner bauen. Ein weiterer Vorteil ist, dass während des Zeitraums, in dem kein Strom von den Gleichstromquellen in die Spulen geliefert wird, die Speicherkondensatoren Ladungen aus den Gleichstromquellen aufnehmen. Hierdurch lässt sich der Wirkungsgrad der erfindungsgemäßen Vorrichtung erhöhen. Auch ist es vorteilhaft, dass mit der vorliegenden Ausführungsform gegenüber der Weiterbildung nur eines Pufferkondensators ein Leistungsausgleich zwischen den einzelnen Gleichstromquellen stattfindet bzw. ermöglicht wird.

In einer besonders bevorzugten alternativen Ausführungsform bildet der Ausgangskreis und die erste Speicherdrossel und die zweite Speicherdrossel einen ersten Inverskreis aus, des Weiteren ist ein zweiter Inverskreis vorgesehen, wobei der zweite Inverskreis in einer dem ersten Inverskreis entsprechenden Schaltungsanordnung verschaltet ist und in dem zweiten Zustand die erste Gleichstromquelle und die zweite Gleichstromquelle mit dem zweiten Inverskreis verschaltet sind und der Spannungsausgang des ersten Inverskreises und der Spannungsausgang des zweiten Inverskreises miteinander in einer Parallelschaltung verbunden sind. Ein Vorteil ist, dass die Serienschaltung von Gleichstromquellen auch in dem zweiten Zustand belastet ist und sich der Wirkungsgrad der Schaltungsanordnung im Vergleich zu einer Ausführungsform erhöht, bei der während des zweiten Zustands die Gleichstromquellen nicht mit dem Ausgangskreis in einer Wirkverbindung stehen und während des zweiten Zustands keine Energie zur Verfügung stellen.

In einer Ausführungsform ist einer der zweiten Pole von einer der ersten Gleichstromquelle mit einem Bezugspotential verschaltet, wobei das Bezugspotential vorzugsweise als Massepotential ausgebildet ist. Untersuchungen haben gezeigt, dass sich bei einer geraden Gesamtzahl von Gleichstromquellen in der Serienschaltung das Bezugspotential sich in besonders vorteilhafter Weise in die Mitte der Serienschaltung legen lässt. Unter der Mitte der Serienschaltung wird hierbei der zweite Pol von derjenigen ersten Gleichstromquelle verstanden die bei der Hälfte der Gesamtzahl angeordnet ist. In einer anderen Weiterbildung umfassen die Gleichstromquellen jeweils eine Solarzelle mit einer Schutzdiode, die vorzugsweise jeweils als Bypassdiode ausgeführt ist.

In einer Weiterbildung ist vorteilhaft, dass die Schalter wenigstens einen hochsperrenden Transistor umfassen. Untersuchungen haben gezeigt, dass sich als Transistoren insbesondere hochsperrende MOSFET mit einem geringen Anschaltwiderstand, der vorzugsweise unterhalb von 30 mOhm liegt, zu bevorzugen sind.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen der Schaltungsanordnungen sind stark schematisiert. Darin zeigen die:
- Figur 1a: eine erste Ausführungsform eines erfindungsgemäßen getakteten Gleichspannungswandlers, wobei der getaktete Gleichspannungswandler in einem ersten Zustand abgebildet ist,
- Figur 1b: der getaktete Gleichspannungswandler, dargestellt in der Figur la, wobei der getaktete Gleichspannungswandler in einem zweiten Zustand abgebildet ist,
- Figur 2: eine zweite Ausführungsform des erfindungsgemäßen getakteten Gleichspannungswandler, wobei der getaktete Gleichspannungswandler eine Vielzahl von ersten Gleichstromquellen aufweist,
- Figur 3: eine dritte Ausführungsform des erfindungsgemäßen getakteten Gleichspannungswandlers, wobei der getaktete Gleichspannungswandler zwei Zusatzdrosseln aufweist,
- Figur 4: eine vierte Ausführungsform des erfindungsgemäßen getakteten Gleichspannungswandlers, wobei der getaktete Gleichspannungswandler einen Eingangskreis und einen von dem Eingangskreis galvanisch getrennten Ausgangskreis aufweist,
- Figur 5: eine fünfte Ausführungsform des erfindungsgemäßen getakteten Gleichspannungswandlers, wobei der getaktete Gleichspannungswandler als Eingangskreis einen ersten Inverskreis und einen zweiten Inverskreis aufweist und ein von dem Eingangskreis galvanisch getrennten Ausgangskreis aufweist.

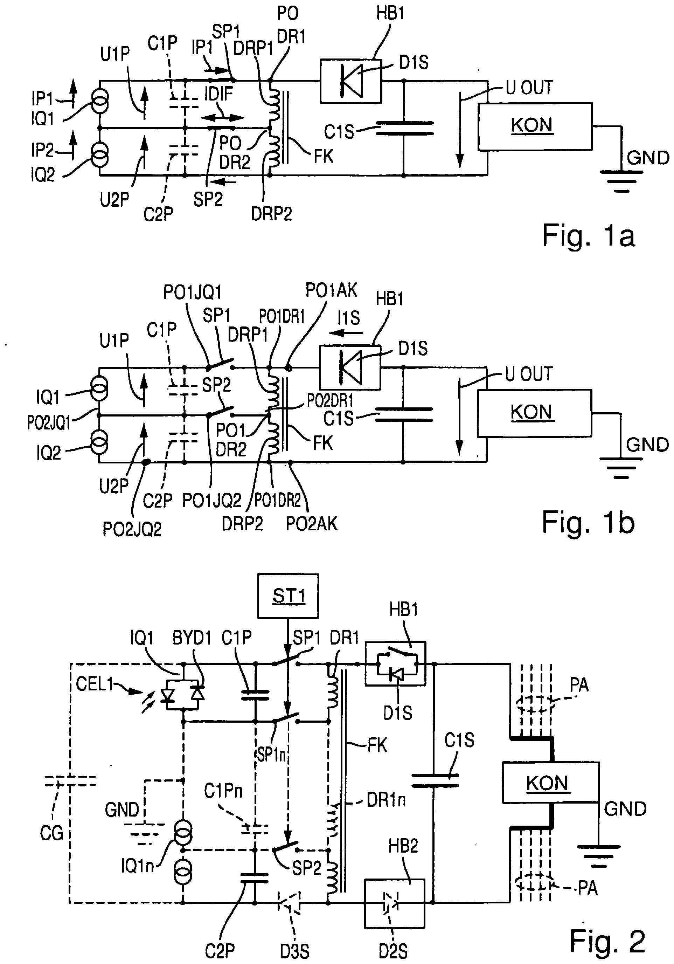

Die Abbildung der Figur 1a zeigt eine erste Ausführungsform eines erfindungsgemäßen getakteten Gleichspannungswandlers DCW, wobei der getaktete Gleichspannungswandler DCW in einem ersten Zustand abgebildet ist und einen Eingangskreis und einem Ausgangskreis aufweist. Der Eingangskreis weist eine erste Schaltungseinheit und eine zweite Schaltungseinheit auf, wobei die erste Schaltungseinheit eine erste Gleichstromquelle IQ1 mit einem ersten Pol PO1IQ1 und einem zweiten Pol, und eine erste Speicherdrossel DRP1 mit einem ersten Pol PO1DR1 und einem zweiten Pol aufweist. Die erste Speicherdrossel DRP1 ist parallel mit der ersten Gleichstromquelle IQ1 verschaltet. Zwischen der ersten Gleichstromquelle IQ1 und der ersten Speicherdrossel DRP1 ist ein erster Schalter SP1 angeordnet. Mittels des ersten Schalters SP1 ist in einem ersten Zustand der erste Pol PO1DR1 der ersten Speicherdrossel DRP1 mit dem ersten Pol PO1IQ1 der ersten Gleichstromquelle IQ1 elektrisch niederohmig verschaltet. Ferner weist die zweite Schaltungseinheit eine zweite Gleichstromquelle IQ2 mit einem ersten Pol PO1IQ2 und einem zweiten Pol PO2IQ2 und eine zweite Speicherdrossel DRP2 mit einem ersten Pol PO1DR2 und einem zweiten Pol PO2DR2 auf. Die zweite Speicherdrossel DRP2 ist parallel mit der zweiten Gleichstromquelle IQ2 verschaltet. Zwischen der zweiten Gleichstromquelle IQ2 und der zweiten Speicherdrossel DRP2 ist ein zweiter Schalter SP2 vorgesehen. Mittels des zweiten Schalters SP2 ist in einem ersten Zustand der erste Pol PO1DR2 der zweiten Speicherdrossel DRP2 mit dem ersten Pol PO1IQ2 der zweiten Gleichstromquelle IQ2 elektrisch niederohmig verschaltet.

In einer bevorzugten alternativen Ausführungsform umfasst die erste Schaltungseinheit einen ersten Speicherkondensator C1P und einen zweiten Speicherkondensator C2P, wobei der erste Speicherkondensator C1P parallel mit der ersten Gleichstromquelle IQ1 und der zweite Speicherkondensator C2P parallel mit der zweiten Gleichstromquelle IQ2 verschaltet ist. Hierbei ist in jeder Schaltungseinheit der Speicherkondensator C1P und der zweite Speicherkondensator C2P parallel mit der jeweiligen Gleichstromquelle unabhängig von der Stellung der beiden Schalter SP1 und SP2 verschaltet. Ein Vorteil ist, dass sowohl der erste Speicherkondensator C1P ein Absinken der Spannung an der ersten Gleichstromquelle IQ1 als auch der zweite Speicherkondensator C2P ein Absinken der Spannung an der zweiten Gleichstromquelle IQ2 bei einer kurzzeitig erhöhten Stromanforderung an dem Eingangskreis ausgleichen und hierdurch die Spannungsstabilität erhöhen. Ein weiterer Vorteil ist, dass während des Zeitraums, in dem kein Strom von den Gleichstromquellen in die Spulen geliefert wird, die den einzelnen Gleichstromquellen zugeordneten Speicherkondensatoren C1P und C2P Ladungen aus den Gleichstromquellen IQ1 und IQ2 aufnehmen. Hierdurch lässt sich der Wirkungsgrad der erfindungsgemäßen Vorrichtung erhöhen. Auch ist es vorteilhaft, dass ein Leistungsausgleich zwischen den einzelnen Gleichstromquellen IQ1 und IQ2 stattfindet bzw. ermöglicht wird.

Die erste Schaltungseinheit und die zweite Schaltungseinheit sind untereinander in Serie verschaltet, wobei die erste Gleichstromquelle IQ1 und die zweite Gleichstromquelle IQ2 einen gemeinsamen elektrischen Anschluss ausbilden und in Serie verschaltet sind, so dass sich eine Spannung U1P der ersten Gleichstromquelle IQ1 mit einer Spannung U2P der zweiten Gleichstromquelle IQ2 addiert. Der erste Pol PO1IQ1 der ersten Gleichstromquelle IQ1 weist gegenüber dem zweiten Pol PO2IQ1 der ersten Gleichstromquelle IQ1 und der erste Pol PO1IQ2 der zweiten Gleichstromquelle IQ2 gegenüber dem zweiten Pol PO2IQ2 der zweiten Gleichstromquelle IQ2 jeweils eine größere Spannung auf. Ferner bildet auch der zweite Pol PO2DR1 der ersten Speicherdrossel DRP1 mit dem ersten Pol PO1DR2 der zweiten Speicherdrossel DRP2 einen gemeinsamen elektrischen Anschluss aus. Hierdurch addieren sich auch die Spannung U1P der ersten Gleichstromquelle IQ1 mit der Spannung U2P der zweiten Gleichstromquelle IQ2 gleichsinnig an den beiden Speicherdrosseln DR1 und DR2.

Des Weiteren weist die erste Speicherdrossel DRP1 und die zweite Speicherdrossel DRP2 einen gemeinsamen Flusskonzentrator FK auf. Es ist wünschenswert mittels des Flusskonzentrators FK eine hohe induktive Kopplung zwischen der ersten Speicherdrossel DRP1 und der zweiten Speicherdrossel DRP2 herzustellen. Hierzu weist der Flusskonzentrator FK vorzugsweise eine hohe Permeabilität und eine geringe Hysterese auf.

Der Ausgangskreis weist einen Spannungsausgang mit einer ersten Ausgangsspannung UOUT und ein erstes Halbeiterbauelement HB1 und einen parallel zu dem Spannungsausgang verschalteten Ausgangskondensator C1S auf. Der Ausgangskreis ist mit dem Eingangskreis, elektrisch niederohmig verschaltet, indem ein erster Pol PO1AK des Ausgangskreises mit dem ersten Pol PO1DR1 der ersten Speicherdrossel DR1 unmittelbar verschaltet ist und indem ein zweiter Pol PO2AK des Ausgangskreises unmittelbar mit dem zweiten Pol PO1DR2 der zweiten Speicherdrossel verschaltet ist. Anders ausgedrückt, ist der Ausgangskreis mittels des ersten Halbeiterbauelements parallel zu dem Eingangskreis geschaltet, wobei der Ausgangskondensator C1S parallel mit der Reihenschaltung aus erster Speicherdrossel DRP2 und zweiter Speicherdrossel DRP2 verschaltet ist.

Des Weiteren umfasst das erste Halbelterbauelement HB1 des Ausgangskreises in einer ersten Ausbildungsform eine erste Diode D1S, wobei die Durchlassrichtung der ersten Diode D1S so gewählt ist, dass ein erster Strom I1S in Richtung des ersten Pols PO1DR1 der ersten Speicherdrossel DR1 fließt. Die Polarität der Ausgangsspannung UOUT ist entgegengesetzt, d.h. invertiert zu der Polarität der Spannung an dem Eingangskreis. Der Der Spannungsausgang des Ausgangskreises ist mit einem Konverter KON und mit einem Bezugspotential verschaltet. Das Bezugspotential ist als Massepotential GND ausgebildet. Der Konverter KON ist in einer ersten Alternative als Wechselrichter oder in einer zweiten Alternative als weiterer Gleichspannungswandler ausgebildet. In einer nicht dargestellten Weiterbildung ist der zweite Pol PO2IQ1 von der ersten Gleichstromquelle IQ1 gleichfalls mit dem Bezugspotential GND verschaltet.

Die Abbildung der Figur 1b zeigt ebenfalls die erste Ausführungsform des Gleichspannungswandlers DCW, dargestellt In der Figur 1a. Nachfolgend werden nur die Unterschiede zu der vorangegangenen Ausführungsform erläutert. Mittels des ersten Schalters SP1 ist in einem zweiten Zustand der erste Pol der ersten Speicherdrossel DRP1 von dem ersten Pol der ersten Gleichstromquelle IQ1 elektrisch getrennt. Ferner ist mittels des zweiten Schalters SP2 in dem zweiten Zustand der erste Pol der zweiten Speicherdrossel DRP2 von dem ersten Pol der zweiten Gleichstromquelle IQ2 elektrisch getrennt. Anders ausgedrückt, während des zweiten Zustandes fließt aus der ersten Gleichstromquelle IQ1 und der zweiten Gleichstromquelle IQ2 keinen Strom durch die beiden Speicherdrosseln DRP1, DRP2. Untersuchungen haben gezeigt, dass die Spannung an dem Spannungsausgang UOUT je nach dem Verhältnis der Zeitspannen aus dem ersten Zustand und dem zweiten Zustand größer oder kleiner als die Spannung der Serienverschaltung von Gleichstromquellen im Eingangskreis ist. Hierbei gilt, dass mit größerem Wert des Verhältnisses die Spannung an dem Spannungsausgang UOUT ansteigt und vice versa. Bevorzugt ist, dass die die Spannung an dem Spannungsausgang UOUT größer als die Spannung der Serienverschaltung ist.

Es versteht sich, dass die Zeitspanne während dessen der zweite Zustand andauert, vorzugsweise kleiner auszuführen ist, als die Zeitspanne während dessen der erste Zustand ausgebildet ist. Sofern zu der beiden Gleichstromquellen IQ1 und IQ2 die Speicherkondensator C1P und C2P parallel geschaltet sind und sich die Spannungen U1P und U2P an den Gleichstromquellen IQ1 und IQ2 während des zweiten Zustandes erhöhen, werden die beiden Speicherkondensator C1P und C2P aufgeladen. Während des ersten Zustands wird hierdurch einem Absinken der Spannungen U1P und U2P an den Gleichstromquellen IQ1 und IQ2 mittels einer Entladung der beiden Speicherkondensator C1P und C2P entgegengewirkt. Der Wirkungsgrad des Gleichspannungswandlers lässt sich hierdurch erhöhen.

In der Abbildung der Figur 2 ist eine zweite Ausführungsform des erfindungsgemäßen getakteten Gleichspannungswandlers dargestellt. Nachfolgend werden nur die Unterschiede zu den Erläuterungen zu den vorangegangenen Figuren erläutert. Die zweite Ausführungsform weist eine Vielzahl von ersten Schaltungseinheiten mit zusätzlichen ersten Gleichstromquellen IQ1n, und ersten Speicherdrosseln DR1n auf. In einer alternativen Ausführungsform weisen die ersten zusätzlichen Schaltungseinheiten jeweils einen zusätzlichen ersten Speicherkondensator C1Pn in Parallelschaltung zu einer der zusätzlichen ersten Gleichstromquellen IQ1n auf. In einer alternativen Ausführung ist die Serienschaltung der Gleichstromquellen in deren spannungsmäßige Mitte mit dem Bezugspotential GND niederohmig elektrisch verschaltet.

Die zusätzlichen ersten Gleichstromquellen IQ1n sind untereinander in einer Serienschaltung verbunden und jeder der zusätzlichen ersten Gleichstromquellen IQ1n ist mit einer der zusätzlichen ersten Speicherdrosseln DR1n einer Parallelschaltung verbunden. Ferner ist jeder der zusätzlichen ersten Gleichstromquellen IQ1n mittels eines zusätzlichen ersten Schalters SP1n mit jeweils einer zusätzlichen ersten Speicherdrossel DR1n verschaltet. Die Spannungen der zusätzlichen ersten Gleichstromquellen IQ1n addieren sich wiederum gleichsinnig. Jeder der ersten Schalter SP1 und SP1n und der zweiten Schalter SP2 trennen während des dargestellten zweiten Zustandes jeweils eine der Gleichstromquellen IQ1, IQ1n und IQ2 von der den Gleichstromquellen IQ1, IQ1n und IQ2 zugeordneten Speicherdrosseln DR1, DR1n und DR2. Die ersten Schalter SP1 und SP1n und zweiten Schalter SP2 sind mit einer Steuereinrichtung ST1 verschaltet. Mittels der Steuereinrichtung ST1 lassen sich die ersten Schalter SP1 und SP1n und zweiten Schalter SP2 synchron öffnen und synchron schließen. Es versteht sich, dass für die ersten Schalter SP1 und SP1n und zweiten Schalter SP2 vorzugsweise hochsperrende DMOS Transistoren eingesetzt werden. Vorliegend umfasst die erste Gleichstromquelle IQ1 eine erste Solarzelle CEL1 mit einer zu der ersten Solarzelle CEL1 antiparallel geschalteten ersten Bypassdiode BYD1. In einer nicht dargestellten Ausführungsform umfasst die erste Solarzelle CEL1 eine Parallelschaltung und / oder eine Serienschaltung von einer Vielzahl von Solarzellen. Es sei angemerkt, dass die Solarzelle CEL1 eine Diodencharakteristik aufweist und bei einer Lichteinstrahlung an dem ersten Pol PO1IQ1 die Spannung U1P positiv gegenüber dem zweiten Pol PO2IQ1 anlegt. Ferner umfassen in einer nicht dargestellten Ausführungsform auch die zusätzlichen ersten Gleichstromquellen IQ1n und die zweite Gleichstromquelle IQ2 weitere Solarzellen mit weiteren Bypassdioden. Hierdurch lassen sich die Gleichstromquellen, d. h. die erste Gleichstromquelle IQ1 und die zusätzlich ersten Gleichstromquellen IQ1n und die zweite Gleichstromquelle IQ2 insgesamt als eine Serienschaltung von Solarzellen auffassen.

Ferner umfasst das erste Halbleiterbauelement HB1 einen zu der ersten Diode D1S in einer Parallelschaltung angeordneten Schalter SP3. Es versteht sich, dass der Schalter bevorzugt als Halbleiterschalter insbesondere als MOS-Transistor mit hochsperrenden Eigenschaften ausgebildet ist. Des Weiteren ist ein einer alternativen Ausbildung ein zweites Halbleiterbauelement HB2 vorgesehen. Vorzugsweise umfasst das zweite Halbleiterbauelement HB2 eine zweite Diode D2S, wobei die Anode der zweiten Diode mit dem zweiten Pol PO2DR2 der zweiten Speicherdrossel DR2 verschaltet ist. In einer weiteren Ausführungsform ist eine dritte Diode DR3 in dem Eingangskreis angeordnet. Hierbei ist die Anode der dritten Diode DR3 mit dem zweiten Pol PO2DR2 der zweiten Speicherdrossel DR2 verschaltet. In einer weiteren alternativen Ausführung weist der Konverter KON eine Vielzahl von weiteren Eingängen PA für den Anschluss von weiteren nicht dargestellten Spannungsausgängen von weiteren Gleichspannungswandlern auf. In einer anderen Alternative ist ein als Pufferkondensator ausgebildetes Speicherelement CG vorgesehen. Ein Vorteil ist, dass während des Zeitraums, in dem kein Strom von den Gleichstromquellen in die Spulen geliefert wird, der Pufferkondensator Ladungen aus den Gleichstromquellen aufnimmt. Hierdurch lässt sich der Wirkungsgrad der erfindungsgemäßen Vorrichtung erhöhen.

Das Speicherelement CG ist parallel zu der Serienschaltung, bestehend aus der ersten Gleichstromquelle IQ1, den zusätzlichen ersten Gleichstromquellen IQ2 und der zweiten Gleichstromquelle IQ2 ausgebildet. Das Speicherelement CG ist sowohl während des ersten Zustands als auch während des zweiten Zustands verschaltet mit der Serienschaltung aus den Gleichstromquellen in einer Parallelschaltung verbunden. Untersuchungen haben gezeigt, dass das Speicherelement CG während des zweiten Zustandes bei einem Spannungsanstieg aufgeladen wird und während des ersten Zustandes entladen wird, sofern die Spannung in dem Eingangskreis sinkt. Ferner haben andere Untersuchungen gezeigt, dass bei einer geeigneten Dimensionierung des ersten Speicherelementes CG sich die parallel zu den einzelnen ersten Gleichstromquellen IQ1, IQ1n und IQ2 geschalteten Speicherkondensator C1P, C1Pn und C2P einsparen lassen.

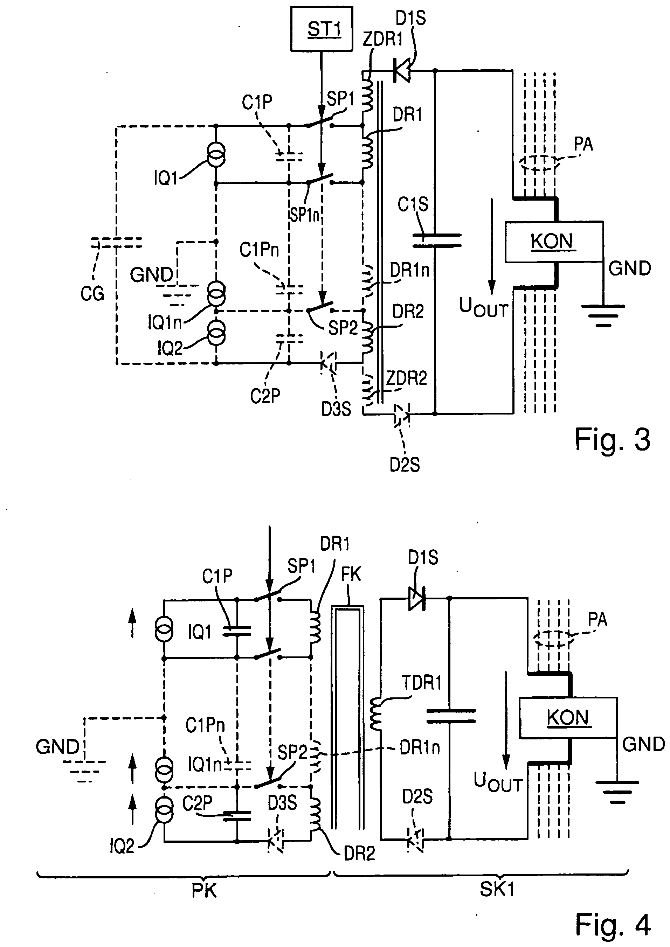

In der Abbildung der Figur 3 ist eine dritte Ausführungsform des erfindungsgemäßen getakteten Gleichspannungswandlers dargestellt. Nachfolgend werden nur die Unterschiede zu den Erläuterungen zu den vorangegangenen Figuren erläutert. Der Ausgangskreis ist mittels einer ersten Zusatzdrossel ZDR1 und mittels einer zweiten Zusatzdrossel ZDR2 mit dem Eingangskreis verschaltet, wobei die beiden Zusatzdrosseln ZDR1 und ZDR2 mit dem Flusskonzentrator FK induktiv gekoppelt sind. Anders ausgedrückt sind die beiden Zusatzdrosseln ZDR1 und ZDR2 zusätzlich zu den Speicherdrosseln DR1, DR1n und DR2 als Wicklungen auf dem vorzugsweise stabförmig ausgeführten Flusskonzentrator FK ausgebildet. Die erste Zusatzdrossel ZDR1 weist einen ersten Anschluss und einen zweiten Anschluss auf. Der erste Anschluss der ersten Zusatzdrossel ZDR1 ist mit der Kathode der ersten Diode D1S und der zweite Anschluss der ersten Zusatzdrossel ZDR1 ist mit dem ersten Pol der ersten Speicherdrossel DR1 verschaltet. Ferner weist die zweite Zusatzdrossel ZDR2 einen ersten Anschluss und einen zweiten Anschluss auf. Der erste Anschluss der zweite Zusatzdrossel ZDR2 ist mit der Anode der zweiten Diode D2S und der zweite Anschluss der zweiten Zusatzdrossel ZDR2 ist mit dem der Anode der dritten Diode D3S verschaltet. Ein Vorteil der Zusatzdrosseln ZDR1 und ZDR2 ist, dass sich die Induktivität in dem Ausgangskreis und das Spannungswandlungsverhältnis zwischen dem Eingangskreis und dem Ausgangskreis und letztlich der Wirkungsgrad der Vorrichtung erhöht. Mit einer erhöhten Induktivität in dem Ausgangskreis lassen sich auch größere Unterschiede zwischen den angeschlossenen ersten Gleichstromquellen IQ1, IQ1n und IQ2 ausgleichen.

In der Abbildung der Figur 4 ist eine vierte Ausführungsform des erfindungsgemäßen getakteten Gleichspannungswandlers dargestellt. Nachfolgend werden nur die Unterschiede zu den Erläuterungen zu den vorangegangenen Figuren erläutert. Der Eingangskreis und der Ausgangskreis weisen nunmehr eine galvanische Trennung mit einer Primärwicklung und einer Sekundärwicklung auf. Hierzu umfasst der Ausgangskreis eine als Sekundärwicklung ausgebildete erste Induktivität TDR1 auf, wobei die erste Induktivität TDR1 mit dem Flusskonzentrator FK stark induktiv gekoppelt ist. Die erste Induktivität ist parallel zu dem Ausgangsspeicherkondensator C1S verschaltet und das erste Halbleiterbauelement HB1 zwischen einem ersten Abgriff der ersten Induktivität TDR1 und einem ersten Abgriff des Ausgangspeicherkondensators angeordnet. Entsprechend der galvanischen Trennung bilden die Speicherdrosseln DR1, DR1n und DR2 bei der Eingangsseite die Primärwicklung aus. Der Eingangskreis lässt sich nunmehr als einen Primärkreis PK und der Ausgangskreis lässt sich als einen ersten Sekundärkreis SK1 bezeichnen. In einer nicht dargestellten Ausführungsform sind primärseitig Zusatzdrosseln ZDR1 und ZDR2 ausgebildet.

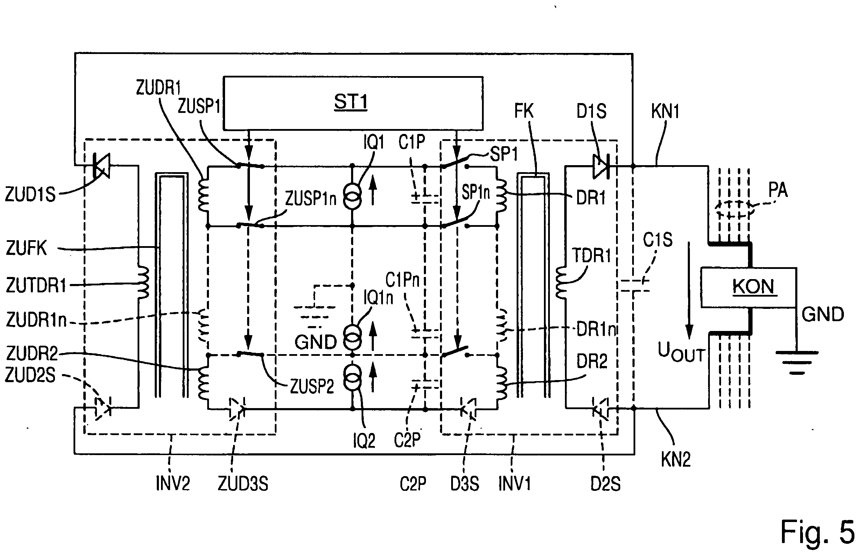

In der Abbildung der Figur 5 ist eine fünfte Ausführungsform des erfindungsgemäßen getakteten Gleichspannungswandlers dargestellt. Nachfolgend werden nur die Unterschiede zu den Ausführungen In Verbindung mit der Darstellung der Ausführungsform der Figur 4 erläutert. Die erste Diode D1S, die optionale Diode D2S und die erste Induktivität TDR1 des Ausgangskreises und die erste Speicherdrossel DR1, die optionalen zusätzlichen ersten Speicherdrosseln DR1n und die zweite Speicherdrossel DR2 mit dem ersten Schalter SP1, den optionalen zusätzlichen ersten Schalter SP1n und dem zweiten Schalter SP2 und mit der optionalen dritten Diode D3S des Eingangskreises bilden einen ersten Inverskreis aus. Die Stellung der Schalter SP1, SP1n und SP2 des ersten Inverskreises INV1 ist in dem ersten Zustand, d.h. geöffnet, dargestellt, wobei eine Änderung der Schalterstellung wird mittels der Steuereinheit ST1 bewirkt. Indem die erste Induktivität TDR1 nur induktiv im Wesentlich mittels des Flusskonzentrators FK mit den primärseitigen Speicherdrosseln DR1, DR1n und DR2 verbunden ist, liegt eine galvanische Trennung zwischen Eingangskreis und Ausgangskreis vor.

Ferner ist ein zweiter Inverskreis INV2 vorgesehen. Der zweite Inverskreis INV2 ist identisch zu dem ersten Inverskreis INV1 ausgebildet. Demgemäß weist der zweite Inverskreis INV2 eine vierte Diode ZUD1S, eine optionale fünfte Diode ZUD2S und eine zweite Induktivität ZUTDR1 auf. Des weiteren umfasst der zweite Inverskreis INV2 eine dritte Speicherdrossel ZUDR1, eine optionale zusätzliche dritte Speicherdrosseln ZUDR1n und eine vierte Speicherdrossel ZUDR2, sowie einen dritten Schalter ZUSP1, einen optionalen zusätzlichen dritten Schalter ZUSP1n und einen fünften zweiten Schalter ZUSP2 und eine optionale vierte Diode ZUD3S. Die Stellung der Schalter ZUSP1, ZUSP1n und ZUSP2 des zweiten Inverskreises INV2 ist in dem zweiten Zustand, d.h. geschlossen, dargestellt, wobei eine Änderung der Schalterstellung wird mittels der Steuereinheit ST1 bewirkt. Die zweite Induktivität ZUTDR1 ist mittels eines weiteren Flusskonzentrators ZUFK nur induktiv mit den primärseitigen Speicherdrosseln ZUDR1, ZUDR1n und ZUDR2 verbunden. Hierdurch ist wiederum eine galvanische Trennung ausgebildet. Ausgangsseitig ist der erste Inverskreis INV1 mit dem zweiten Inverskreis INV2 mittels eines ersten Knotens KN1 und mittels eines zweiten Knotens KN2 verschaltet. Hierdurch sind die beiden Inverskreise INV1 und INV2 zueinander parallel mit dem ersten Ausgangskondensator C1S und mit dem Konverter KON verschaltet.

Die ersten Gleichstromquellen IQ1, IQ1n und IQ2 sind mit den Schaltern SP1, SP1n und SP2 des ersten Inverskreises INV1 und mit den Schaltern ZUSP1, ZUSP1n und ZUSP2 des zweiten Inverskreises INV2 verschaltet. In dem ersten Zustand werden mittels den ersten Gleichstromquellen IQ1, IQ1n und IQ2 die Speicherdrosseln ZUDR1, ZUDR1n und ZUDR2 des zweiten Inverskreises und in dem zweiten Zustand die Speicherdrosseln DR1, DR1n und DR2 des ersten Inverskreises INV1 bestromt. Bezüglich der ersten Gleichstromquellen IQ1, IQln und IQ2 sind die beiden Inverskreise INV1 und INV2 in einer Art H-Brückenschaltung verbunden. Eine Umschaltung zwischen dem ersten Zustand und dem zweiten Zustand wird mittels der Steuereinheit ST1 bewirkt.

Ein Vorteil der Parallelschaltung der beiden Inverskreis INV1 und INV2 ist es, dass nahezu zu jedem Zeitpunkt den Gleichstromquellen IQ1, IQ1n und IQ2 belastet sind und sich hierdurch der Wirkungsgrad der gesamten Anordnung erhöht. Des Weiteren haben Untersuchungen gezeigt, dass sich bei der vorliegenden Ausführungsform insbesondere die Kapazität der Speicherkondensatoren C1Pn an den Gleichstromquellen IQ1, IQ1n und IQ2 verringern lässt. Ferner lässt sich auch die Kapazität des Speicherelementes CG gegenüber den vorangegangenen Ausführungsformen verringern.

## Patentansprüche

1. Getakteter Gleichspannungswandler (DCW) mit einem Eingangskreis und einem Ausgangskreis, wobei der Eingangskreis eine erste Schaltungseinheit und eine zweite Schaltungseinheit aufweist, und die erste Schaltungseinheit aufweist,
- eine erste Gleichstromquelle (IQ1) mit einem ersten Pol und einem zweiten Pol, und
- eine erste Speicherdrossel (DRP1) mit einem ersten Pol und einem zweiten Pol, wobei die erste Speicherdrossel (DRP1) parallel mit der ersten Gleichstromquelle (IQ1) verschaltet ist,
- einen ersten Schalter (SP1), wobei der erste Schalter (SP1) zwischen der ersten Gleichstromquelle (IQ1) und der ersten Speicherdrossel (DRP1) angeordnet ist und in einem ersten Zustand den ersten Pol der ersten Speicherdrossel (DRP1) mit den ersten Pol der ersten Gleichstromquelle (IQ1) verbindet und in einem zweiten Zustand den ersten Pol der ersten Speicherdrossel (DRP1) von dem ersten Pol der ersten Gleichstromquelle (IQ1) trennt,
und die zweite Schaltungseinheit aufweist,
- eine zweite Gleichstromquelle (IQ2) mit einem ersten Pol und einem zweiten Pol, und
- eine zweite Speicherdrossel (DRP2) mit einem ersten Pol und einem zweiten Pol und die zweite Speicherdrossel (DRP2) parallel mit der zweiten Gleichstromquelle (IQ2) verschaltet ist, und
- einen zweiten Schalter (SP2), wobei der zweite Schalter (SP2) zwischen der zweiten Gleichstromquelle (IQ2) und der zweiten Speicherdrossel (DRP2) angeordnet ist und in dem ersten Zustand den ersten Pol der zweiten Speicherdrossel (DRP2) mit dem ersten Pol der zweiten Gleichstromquelle (IQ2) verbindet und in dem zweiten Zustand den ersten Pol der zweiten Speicherdrossel (DRP2) von dem ersten Pol der zweiten Gleichstromquelle (IQ2) trennt, und
die erste Schaltungseinheit und die zweite Schaltungseinheit in Serie verschaltet sind, wobei der zweite Pol der ersten Speicherdrossel (DRP1) mit dem ersten Pol der zweiten Speicherdrossel (DRP2) einen gemeinsamen elektrischen Anschluss ausbilden und die erste Speicherdrossel (DRP1) und die zweite Speicherdrossel (DRP2) eine induktive Kopplung mittels eines gemeinsamen magnetischen Kerns als Flusskonzentrator (FK) aufweisen und sich die Spannung an der ersten Speicherdrossel (DRP1) mit der Spannung an der zweiten Speicherdrossel (DRP2) addieren, und
die erste Gleichstromquelle (IQ1) und die zweite Gleichstromquelle (IQ2) einen gemeinsamen elektrischen Anschluss aufweisen und in Serie verschaltet sind und sich die Spannung der ersten Gleichstromquelle (IQ1) mit der Spannung der zweiten Gleichstromquelle (IQ2) addiert,
**dadurch gekennzeichnet, dass**
der Ausgangskreis einen Spannungsausgang (UOUT) und ein erstes Halbeiterbauelement (HB1) und einen parallel zu dem Spannungsausgang (UOUT) verschalteten Ausgangspeicherkondensator (C1S) aufweist, und
der Ausgangskreis mittels des ersten Halbeiterbauelements (HB1) parallel zu dem Eingangskreis geschaltet ist, und der Ausgangsspeicherkondensator (C1S) parallel mit der Reihenschaltung aus der ersten Speicherdrossel (DRP2) und der zweiten Speicherdrossel (DRP2) verschaltet ist.

2. Getakteter Gleichspannungswandler (DCW) nach Anspruch 1, **dadurch gekennzeichnet, dass** der erste Pol der ersten Gleichstromquelle (IQ1) gegenüber dem zweiten Pol der ersten Gleichstromquelle (IQ1) und der erste Pol der zweiten Gleichstromquelle (IQ2) gegenüber dem zweiten Pol der zweiten Gleichstromquelle (IQ2) jeweils ein größeres Spannungspotential aufweisen.

3. Getakteter Gleichspannungswandler (DCW) nach einem der vorangegangenen Ansprüche, **dadurch gekennzeichnet, dass** das erste Halbleiterbauelement (HB1) eine erste Diode (D1S) und / oder einen Halbleiterschalter umfasst.

4. Getakteter Gleichspannungswandler (DCW) nach einem der vorangegangenen Ansprüche, **dadurch gekennzeichnet, dass** eine Vielzahl von ersten Schaltungseinheiten in einer Serienschaltung verschaltet sind, wobei nur eine der ersten Schaltungseinheiten mit der zweiten Schaltungseinheit unmittelbar verschaltet ist.

5. Getakteter Gleichspannungswandler (DCW) nach einem der vorangegangenen Ansprüche, **dadurch gekennzeichnet, dass** der Ausgangskreis mittels einer Zusatzdrossel (ZDR1, ZDR2) mit dem Eingangskreis verschaltet und die Zusatzdrossel (ZDR1, ZDR2) mit dem Flusskonzentrator (FK) induktiv gekoppelt ist.

6. Getakteter Gleichspannungswandler (DCW) mit einem Eingangskreis und einem Ausgangskreis, wobei der Eingangskreis eine erste Schaltungseinheit und eine zweite Schaltungseinheit aufweist, und die erste Schaltungseinheit aufweist,
- eine erste Gleichstromquelle (IQ1) mit einem ersten Pol und einem zweiten Pol, und
- eine erste Speicherdrossel (DRP1) mit einem ersten Pol und einem zweiten Pol, wobei die erste Speicherdrossel (DRP1) parallel mit der ersten Gleichstromquelle (IQ1) verschaltet ist,
- einen ersten Schalter (SP1), wobei der erste Schalter (SP1) zwischen der ersten Gleichstromquelle (IQ1) und der ersten Speicherdrossel (DRP1) angeordnet ist und in einem ersten Zustand den ersten Pol der ersten Speicherdrossel (DRP1) mit den ersten Pol der ersten Gleichstromquelle (IQ1) verbindet und in einem zweiten Zustand den ersten Pol der ersten Speicherdrossel (DRP1) von dem ersten Pol der ersten Gleichstromquelle (IQ1) trennt,
und die zweite Schaltungseinheit aufweist,
- eine zweite Gleichstromquelle (IQ2) mit einem ersten Pol und einem zweiten Pol, und
- eine zweite Speicherdrossel (DRP2) mit einem ersten Pol und einem zweiten Pol und die zweite Speicherdrossel (DRP2) parallel mit der zweiten Gleichstromquelle (IQ2) verschaltet ist, und
- einen zweiten Schalter (SP2), wobei der zweite Schalter (SP2) zwischen der zweiten Gleichstromquelle (IQ2) und der zweiten Speicherdrossel (DRP2) angeordnet ist und in dem ersten Zustand den ersten Pol der zweiten Speicherdrossel (DRP2) mit dem ersten Pol der zweiten Gleichstromquelle (IQ2) verbindet und in dem zweiten Zustand den ersten Pol der zweiten Speicherdrossel (DRP2) von dem ersten Pol der zweiten Gleichstromquelle (IQ2) trennt, und
die erste Schaltungseinheit und die zweite Schaltungseinheit in Serie verschaltet sind, wobei der zweite Pol der ersten Speicherdrossel (DRP1) mit dem ersten Pol der zweiten Speicherdrossel (DRP2) einen gemeinsamen elektrischen Anschluss ausbilden und die erste Speicherdrossel (DRP1) und die zweite Speicherdrossel (DRP2) eine induktive Kopplung mittels eines gemeinsamen magnetischen Kerns als Flusskonzentrator (FK) aufweisen und sich die Spannung an der ersten Speicherdrossel (DRP1) mit der Spannung an der zweiten Speicherdrossel (DRP2) addiert, **dadurch gekennzeichnet, dass**
der Ausgangskreis einen Spannungsausgang (UOUT) und ein erstes Halbeiterbauelement (HB1) und einen parallel zu dem Spannungsausgang (UOUT) verschalteten Ausgangspeicherkondensator (C1S) aufweist, und
der Eingangskreis und Ausgangskreis eine galvanische Trennung aufweisen und der Ausgangskreis eine als Sekundärwicklung ausgebildete erste Induktivität (TDR1) aufweist, wobei die erste Induktivität (TDR1) mit dem Flusskonzentrator (FK) induktiv gekoppelt ist und die erste Induktivität (TDR1) parallel zu dem Ausgangskondensator (C1S) verschaltet und das erste Halbleiterbauelement (HB1) zwischen einem ersten Abgriff der erste Induktivität (TDR1) und einem ersten Abgriff des Ausgangskondensator (C1S) angeordnet ist.

7. Getakteter Gleichspannungswandler (DCW) nach einem der vorangegangenen Ansprüche, **dadurch gekennzeichnet, dass** ein Ausgangskondensator (C1S) parallel zu der Serienschaltung der ersten Schaltungseinheit und der zweiten Schaltungseinheit sowohl während des ersten Zustands als auch während des zweiten Zustands verschaltet ist.

8. Getakteter Gleichspannungswandler (DCW) nach einem der vorangegangenen Ansprüche, **dadurch gekennzeichnet, dass** in jeder Schaltungseinheit ein Speicherkondensator (C1P, C1Pn, C2P) parallel mit der jeweiligen Gleichstromquelle (IQ1, IQ1n, IQ2) sowohl während des ersten Zustands als auch während des zweiten Zustands verschaltet ist.

9. Getakteter Gleichspannungswandler (DCW) nach einem der vorangegangenen Ansprüche, **dadurch gekennzeichnet, dass** der Ausgangskreis und die erste Speicherdrossel (DRP1) und die zweite Speicherdrossel (DRP2) einen ersten Inverskreis (INV1) ausbilden und ein zweiter Inverskreis (INV2) in einer dem ersten Inverskreis (INV1) entsprechenden Schaltungsanordnung vorgesehen ist und in dem zweiten Zustand die erste Gleichstromquelle (IQ1) und die zweite Gleichstromquelle (IQ2) mit dem zweiten Inverskreis (INV2) verschaltet sind und der Spannungsausgang des ersten Inverskreises (INV1) und der Spannungsausgang des zweiten Inverskreises (INV2) miteinander in einer Parallelschaltung verbunden sind.

10. Getakteter Gleichspannungswandler (DCW) nach einem der vorangegangenen Ansprüche, **dadurch gekennzeichnet, dass** einer der zweiten Pole von einer der ersten Gleichstromquelle (IQ1) mit einem Bezugspotential (GND) verschaltet ist.

11. Getakteter Gleichspannungswandler (DCW) nach einem der vorangegangenen Ansprüche, **dadurch gekennzeichnet, dass** die Gleichstromquellen (IQ1, IQ1n, IQ2) jeweils mindestens eine Solarzelle (CEL1) mit mindestens einer Bypassdiode (BYD1) umfassen.

12. Getakteter Gleichspannungswandler (DCW) nach einem der vorangegangenen Ansprüche, **dadurch gekennzeichnet, dass** die Schalter (SP1, SP1n, SP2) wenigstens einen hochsperrenden Transistor umfassen.

13. Getakteter Gleichspannungswandler (DCW) nach einem der vorangegangenen Ansprüche, **dadurch gekennzeichnet, dass** die Spannung am Spannungsausgang (UOUT) größer ist als die Spannung der Serienverschaltung von Gleichstromquellen (IQ1, IQ1n, IQ2) im Eingangskreis.

## Claims

1. Pulsed direct voltage converter (DCW) with an input circuit and an output circuit, wherein the input circuit comprises a first circuit unit and a second circuit unit, and the first circuit unit comprises
- a first direct current source (IQ1) with a first pole and a second pole, and
- a first storage choke (DRP1) with a first pole and a second pole, wherein the first storage choke (DRP1) is connected in parallel with the first direct current source (IQ1),
- a first switch (SP1), wherein the first switch (SP1) is arranged between the first direct current source (IQ1) and the first storage choke (DRP1) and in a first state connects the first pole of the first storage choke (DRP1) with the first pole of the first direct current source (IQ1) and in a second state separates the first pole of the first storage choke (DRP1) from the first pole of the first direct current source (IQ1),
and the second circuit unit comprises
- a second direct current source (IQ2) with a first pole and a second pole and
- a second storage choke (DRP2) with a first pole and a second pole and the second storage choke (DRP2) is connected in parallel with the second direct current source (IQ2) and
- a second switch (SP2), wherein the second switch (SP2) is arranged between the second direct current source (IQ2) and the second storage choke (DRP2) and in the first state connects the first pole of the second storage choke (DRP2) with the first pole of the second direct current source (IQ2) and in the second state separates the first pole of the second storage choke (DRP2) from the first pole of the second direct current source (IQ2) and
the first circuit unit and the second circuit unit are connected in series, wherein the second pole of the first storage choke (DRP1) and the first pole of the second storage choke (DRP2) form a common electrical connection and the first storage choke (DRP1) and the second storage choke (DRP2) have an inductive coupling by means of a common magnetic core as flux concentrator (FK) and the voltage at the first storage choke (DRP1)and the voltage at the second storage choke (DRP2) add together and
the first direct current source (IQ1) and the second direct current source (IQ2) have a common electrical connection and are connected in series and the voltage of the first direct current source (IQ1) and the voltage of the second direct current source (IQ2) add together,
**characterised in that**
the output circuit comprises a voltage output (UOUT) and a first semiconductor element
(HB1) and an output storage capacitor (C1S), which is connected in parallel with the voltage output (UOUT) and
the output circuit is connected by means of the first semiconductor element (HB1) in parallel with the input circuit and the output storage capacitor (C1S) is connected in parallel with the series connection of the first storage choke (DRP1) and the second storage choke (DRP2).

2. Pulsed direct voltage converter (DCW) according to claim 1, **characterised in that** the first pole of the first direct current source (IQ1) has a greater voltage potential relative to the second pole of the first direct current source (IQ1) and the first pole of the second direct current source (IQ2) has a greater voltage potential relative to the second pole of the second direct current source (IQ2).

3. Pulsed direct voltage converter (DCW) according to any one of the preceding claims, **characterised in that** the first semiconductor element (HB1) comprises a first diode (D1S) and/or a semiconductor switch.

4. Pulsed direct voltage converter (DCW) according to any one of the preceding claims, **characterised in that** first circuit units of a plurality are connected in a series circuit, wherein only one of the first circuit units is directly connected with the second circuit unit.

5. Pulsed direct voltage converter (DCW) according to any one of the preceding claims, **characterised in that** the output circuit is connected with the input circuit by means of an additional choke (ZDR1, ZDR2) and the additional choke (ZDR1, ZDR2) is inductively coupled with the flux concentrator (FK).

6. Pulsed direct voltage converter (DCW) with an input circuit and an output circuit, wherein the input circuit comprises a first circuit unit and a second circuit unit, and the first circuit unit comprises
- a first direct current source (IQ1) with a first pole and a second pole, and
- a first storage choke (DRP1) with a first pole and a second pole, wherein the first storage choke (DRP1) is connected in parallel with the first direct current source (IQ1),
- a first switch (SP1), wherein the first switch (SP1) is arranged between the first direct current source (IQ1) and the first storage choke (DRP1) and in a first state connects the first pole of the first storage choke (DRP1) with the first pole of the first direct current source (IQ1) and in a second state separates the first pole of the first storage choke (DRP1) from the first pole of the first direct current source (IQ1),
and the second circuit unit comprises
- a second direct current source (IQ2) with a first pole and a second pole and
- a second storage choke (DRP2) with a first pole and a second pole and the second storage choke (DRP2) is connected in parallel with the second direct current source (IQ2) and
- a second switch (SP2), wherein the second switch (SP2) is arranged between the second direct current source (IQ2) and the second storage choke (DRP2) and in the first state connects the first pole of the second storage choke (DRP2) with the first pole of the second direct current source (IQ2) and in the second state separates the first pole of the second storage choke (DRP2) from the first pole of the second direct current source (IQ2) and
the first circuit unit and the second circuit unit are connected in series, wherein the second pole of the first storage choke (DRP1) and the first pole of the second storage choke (DRP2) form a common electrical connection and the first storage choke (DRP1) and the second storage choke (DRP2) have an inductive coupling by means of a common magnetic core as flux concentrator (FK) and the voltage at the first storage choke (DRP1) and the voltage at the second storage choke (DRP2) add together,
**characterised in that**
the output circuit comprises a voltage output (UOUT) and a first semiconductor element (HB1) and an output storage capacitor (C1S) connected in parallel with the voltage output (UOUT) and
the input circuit and output circuit have electrical separation and the output circuit has a first inductance (TDR1) formed as a secondary winding, wherein the first inductance (TDR1) is inductively coupled with the flux concentrator (FK) and the first inductance (TDR1) is connected in parallel with the output capacitor (C1S) and the first semiconductor element (HB1) is arranged between a first tap of the first inductance (TDR1) and a first tap of the output capacitor (C1S).

7. Pulsed direct voltage converter (DCW) according to any one of the preceding claims, **characterised in that** an output capacitor (C1S) is connected in parallel with the series connection of the first circuit unit and the second circuit unit not only during the first state, but also during the second state.

8. Pulsed direct voltage converter (DCW) according to any one of the preceding claims, **characterised in that** in each circuit unit a storage capacitor (C1P, C1Pn, C2P) is connected in parallel with the respective direct current source (IQ1, IQ1n, IQ2) not only during the first state, but also during the second state.

9. Pulsed direct voltage converter (DCW) according to any one of the preceding claims, **characterised in that** the output circuit and the first storage choke (DRP1) and the second storage choke (DRP2) form a first inverse circuit (INV1), and a second inverse circuit (INV2) is provided in a circuit arrangement corresponding with the first inverse circuit (INV1) and in the second state the first direct current source (IQ1) and the second direct current source (IQ2) are connected with the second inverse circuit (INV2) and the voltage output of the first inverse circuit (INV1) and the voltage output of the second inverse circuit (INV2) are connected together in a parallel connection.

10. Pulsed direct voltage converter (DCW) according to any one of the preceding claims, **characterised in that** one of the second poles of one of the first direct current sources (IQ1) is connected with a reference potential (GND).

11. Pulsed direct voltage converter (DCW) according to any one of the preceding claims, **characterised in that** the direct current sources (IQ1, IQIn, IQ2) each comprise a solar cell (CEL1) with at least one bypass diode (BYD1).

12. Pulsed direct voltage converter (DCW) according to any one of the preceding claims, **characterised in that** the switches (SP1, SP1n, SP2) comprise at least one high-blocking transistor.

13. Pulsed direct voltage converter (DCW) according to any one of the preceding claims, **characterised in that** the voltage at the voltage output (UOUT) is greater than the voltage of the series connection of direct voltage sources (IQ1, IQ1n, IQ2) in the input circuit.

## Revendications

1. Convertisseur de tension continue cadencé (DCW) avec un circuit d'entrée et un circuit de sortie, dans lequel
le circuit d'entrée présente une première unité de circuit et une seconde unité de circuit et
la première unité de circuit présente
- une première source de courant continu (IQ1) avec un premier pôle et un second pôle et
- une première bobine d'accumulation (DRP1) avec un premier pôle et un second pôle, dans lequel la première bobine d'accumulation (DRP1) est connectée en parallèle à la première source de courant continu (IQ1),
- un premier interrupteur (SP1), dans lequel le premier interrupteur (SP1) est disposé entre la première source de courant continu (IQ1) et la première bobine d'accumulation (DRP1) et relie dans un premier état le premier pôle de la première bobine d'accumulation (DRP1) au premier pôle de la première source de courant continu (IQ1) et sépare dans un second état le premier pôle de la première bobine d'accumulation (DRP1) du premier pôle de la première source de courant continu (IQ1),
et
la seconde unité de circuit présente
- une seconde source de courant continu (IQ2) avec un premier pôle et un second pôle et
- une seconde bobine d'accumulation (DRP2) avec un premier pôle et un second pôle, dans lequel la seconde bobine d'accumulation (DRP2) est connectée en parallèle à la seconde source de courant continu (IQ2), et
- un second interrupteur (SP2), dans lequel le second interrupteur (SP2) est disposé entre la seconde source de courant continu (IQ2) et la seconde bobine d'accumulation (DRP2) et relie dans le premier état le premier pôle de la seconde bobine d'accumulation (DRP2) au premier pôle de la seconde source de courant continu (IQ2) et sépare dans un second état le premier pôle de la seconde bobine d'accumulation (DRP2) du premier pôle de la seconde source de courant continu (IQ2),
et
la première unité de circuit et la seconde unité de circuit sont connectées en série, dans lequel le second pôle de la première bobine d'accumulation (DRP1) forme avec le premier pôle de la seconde bobine d'accumulation (DRP2) un raccord électrique commun et la première bobine d'accumulation (DRP1) et la seconde bobine d'accumulation (DRP2) présentent un couplage inductif au moyen d'un noyau magnétique commun comme concentrateur de flux (FK) et la tension à la première bobine d'accumulation (DRP1) s'ajoute à la tension à la seconde bobine d'accumulation (DRP2), et
la première source de courant continu (IQ1) et la seconde source de courant continu (IQ2) présentent un raccord électrique commun et sont connectées en série et la tension de la première source de courant continu (IQ1) s'ajoute à la tension de la seconde source de courant continu (IQ2),
**caractérisé en ce que**
le circuit de sortie présente une sortie de tension (UOUT) et un premier composant semi-conducteur (HB1) et un condensateur d'accumulation de sortie (C1S) connecté en parallèle à la sortie de tension (UOUT) et
le circuit de sortie est connecté en parallèle au circuit d'entrée au moyen du premier composant semi-conducteur (HB1) et le condensateur d'accumulation de sortie (C1S) est connecté en parallèle au circuit série composé de la première bobine d'accumulation (DRP1) et de la seconde bobine d'accumulation (DRP2).

2. Convertisseur de tension continue cadencé (DCW) selon la revendication 1, **caractérisé en ce que** le premier pôle de la première source de courant continu (IQ1) et le premier pôle de la seconde source de courant continu (IQ2) présentent respectivement un potentiel de tension plus élevé que le second pôle de la première source de courant continu (IQ1) et le second pôle de la seconde source de courant continu (IQ2).

3. Convertisseur de tension continue cadencé (DCW) selon l'une quelconque des revendications précédentes, **caractérisé en ce que** le premier composant semi-conducteur (HB1) comprend une première diode (D1S) et/ou un interrupteur à semi-conducteur.

4. Convertisseur de tension continue cadencé (DCW) selon l'une quelconque des revendications précédentes, **caractérisé en ce qu'**une multiplicité de premières unités de circuit sont connectées en un circuit série, dans lequel seule une des premières unités de circuit est connectée directement à la seconde unité de circuit.

5. Convertisseur de tension continue cadencé (DCW) selon l'une quelconque des revendications précédentes, **caractérisé en ce que** le circuit de sortie est connecté au circuit d'entrée au moyen d'une bobine supplémentaire (ZDR1, ZDR2) et la bobine supplémentaire (ZDR1, ZDR2) est couplée de façon inductive au concentrateur de flux (FK).

6. Convertisseur de tension continue cadencé (DCW) avec un circuit d'entrée et un circuit de sortie, dans lequel
le circuit d'entrée présente une première unité de circuit et une seconde unité de circuit et
la première unité de circuit présente
- une première source de courant continu (IQ1) avec un premier pôle et un second pôle et
- une première bobine d'accumulation (DRP1) avec un premier pôle et un second pôle, dans lequel la première bobine d'accumulation (DRP1) est connectée en parallèle à la première source de courant continu (IQ1),
- un premier interrupteur (SP1), dans lequel le premier interrupteur (SP1) est disposé entre la première source de courant continu (IQ1) et la première bobine d'accumulation (DRP1) et relie dans un premier état le premier pôle de la première bobine d'accumulation (DRP1) au premier pôle de la première source de courant continu (IQ1) et sépare dans un second état le premier pôle de la première bobine d'accumulation (DRP1) du premier pôle de la première source de courant continu (IQ1)
et
la seconde unité de circuit présente
- une seconde source de courant continu (IQ2) avec un premier pôle et un second pôle et
- une seconde bobine d'accumulation (DRP2) avec un premier pôle et un second pôle, dans lequel la seconde bobine d'accumulation (DRP2) est connectée en parallèle à la seconde source de courant continu (IQ2),
- un second interrupteur (SP2), dans lequel le second interrupteur (SP2) est disposé entre la seconde source de courant continu (IQ2) et la seconde bobine d'accumulation (DRP2) et relie dans le premier état le premier pôle de la seconde bobine d'accumulation (DRP2) au premier pôle de la seconde source de courant continu (IQ2) et sépare dans le second état le premier pôle de la seconde bobine d'accumulation (DRP2) du premier pôle de la seconde source de courant continu (IQ2),
et
la première unité de circuit et la seconde unité de circuit sont connectées en série, dans lequel le second pôle de la première bobine d'accumulation (DRP1) forme avec le premier pôle de la seconde bobine d'accumulation (DRP2) un raccord électrique commun et la première bobine d'accumulation (DRP1) et la seconde bobine d'accumulation (DRP2) présentent un couplage inductif au moyen d'un noyau magnétique commun comme concentrateur de flux (FK) et la tension à la première bobine d'accumulation (DRP1) s'ajoute à la tension à la seconde bobine d'accumulation (DRP2) et
**caractérisé en ce que**
le circuit de sortie présente une sortie de tension (UOUT) et un premier composant semi-conducteur (HB1) et un condensateur d'accumulation de sortie (CS1) connecté en parallèle à la sortie de tension (UOUT),
le circuit d'entrée et le circuit de sortie présentent une séparation galvanique et le circuit de sortie présente une première inductance (TDR1) sous la forme d'un enroulement secondaire, dans lequel la première inductance (TDR1) est couplée de façon inductive au concentrateur de flux (FK) et la première inductance (TDR1) est connectée en parallèle au condensateur de sortie (C1S) et le premier composant semi-conducteur (HB1) est disposé entre une première prise de l'inductance (TDR1) et une première prise du condensateur de sortie (C1S).

7. Convertisseur de tension continue cadencé (DCW) selon l'une quelconque des revendications précédentes, **caractérisé en ce qu'**un condensateur de sortie (C1S) est connecté en parallèle au circuit série de la première unité de circuit et de la seconde unité de circuit aussi bien pendant le premier état que pendant le second état.

8. Convertisseur de tension continue cadencé (DCW) selon l'une quelconque des revendications précédentes, **caractérisé en ce qu'**un condensateur d'accumulation (C1P, C1Pn, C2P) est dans chaque unité de circuit connecté en parallèle à la source de courant continu respective (IQ1, IQ1n, IQ2) aussi bien pendant le premier état que pendant le second état.

9. Convertisseur de tension continue cadencé (DCW) selon l'une quelconque des revendications précédentes, **caractérisé en ce que** le circuit de sortie et la première bobine d'accumulation (DRP1) et la seconde bobine d'accumulation (DRP2) forment un premier circuit inverse (INV1) et il est prévu un second circuit inverse (INV2) dans un agencement de circuit correspondant au premier circuit inverse (INV1) et dans le second état la première source de courant continu (IQ1) et la seconde source de courant continu (IQ2) sont connectées au second circuit inverse (INV2) et la sortie de tension du premier circuit inverse (INV1) et la sortie de tension du second circuit inverse (INV2) sont reliées l'une à l'autre en un circuit parallèle.

10. Convertisseur de tension continue cadencé (DCW) selon l'une quelconque des revendications précédentes, **caractérisé en ce qu'**un des seconds pôles d'une première source de courant continu (IQ1) est connecté à un potentiel de référence (GND).

11. Convertisseur de tension continue cadencé (DCW) selon l'une quelconque des revendications précédentes, **caractérisé en ce que** les sources de courant continu (IQ1, IQ1n, IQ2) comprennent respectivement au moins une cellule solaire (CEL1) avec au moins une diode de dérivation (BYD1).

12. Convertisseur de tension continue cadencé (DCW) selon l'une quelconque des revendications précédentes, **caractérisé en ce que** les interrupteurs (SP1, SP1n, SP2) comprennent au moins un transistor à blocage haut.

13. Convertisseur de tension continue cadencé (DCW) selon l'une quelconque des revendications précédentes, **caractérisé en ce que** la tension à la sortie de tension (UOUT) est supérieure à la tension de la connexion série de sources de courant continu (IQ1, IQ1n, IQ2) dans le circuit d'entrée.
